# EUROPÄISCHE PATENTSCHRIFT

(11) **EP 2 262 653 B1**
(45) Veröffentlichungstag und Bekanntmachung des Hinweises auf die Patenterteilung: **30.11.2011**
(21) Anmeldenummer: 09719100.1
(22) Anmeldetag: 12.03.2009
(51) Int. Cl.: B60D 1/64, B62D 53/12

(54) **STECKERSYSTEME FÜR ANHÄNGERFAHRZEUGE**
PLUG-IN SYSTEMS FOR TRAILER VEHICLES
SYSTÈME ENFICHABLE POUR SEMI-REMORQUES

(30) Priorität: 12.03.2008 DE 102008014285
(43) Veröffentlichungstag der Anmeldung: 22.12.2010
(73) Patentinhaber: Jost-Werke GmbH, 63263 Neu-Isenburg (DE)
(72) Erfinder: ALGÜERA, José Manuel, 63739 Aschaffenburg (DE); EIERMANN, Michael, 64319 Pfungstadt (DE); HABER, Steffen, 64521 Groß-Gerau (DE)
(74) Vertreter: Fuchs
(86) Internationale Anmeldenummer: PCT/EP2009/052937
(87) Internationale Veröffentlichungsnummer: WO 2009/112553

(56) Entgegenhaltungen:
- EP-A- 1 624 116
- EP-A- 1 900 620
- WO-A-01/60645
- WO-A-2005/028220
- DE-A1- 10 159 417
- DE-A1-102004 024 333
- FR-A- 1 479 487
- US-A- 4 738 463

## Beschreibung

Die Erfindung betrifft ein Steckersystem für Anhängerfahrzeuge mit einem automatisierten Kupplungssystem der Versorgungsleitungen, umfassend einen jeweils die Leitungskontakte tragenden Stecker und eine Steckerdose, wobei der Stecker erste Führungselemente aufweist, die bei einer Annäherung mit zweiten Führungselementen der Steckerdose in Wirkeingriff gelangen. Darüber hinaus ist die Erfindung an einer Steckerhälfte verwirklicht.

Unter Versorgungsleitungen werden elektrisch leitende Kabelverbindungen sowie Druckluft- und gegebenenfalls Hydraulikleitungen verstanden. Die Anhängerfahrzeuge können beispielsweise Sattel- oder Gliederzüge sein.

Der Sattelzug wird üblicherweise aus einem Zugfahrzeug und einem daran angekuppelten Auflieger gebildet. Hierfür trägt das Zugfahrzeug eine Sattelkupplung, in die ein auf der Unterseite des Aufliegers angeordneter Königszapfen eingefahren und anschließend verriegelt wird. Die Sattelkupplungsplatte ist zum Ankuppeln des Aufliegers üblicherweise mit einer in Fahrtrichtung keilförmig zulaufenden Einfahröffnung ausgebildet, welche einen freien Bauraum mit mindestens einer Bauraumtiefe aufweist, die ein Ein- und Ausfahren des Königszapfens in die Sattelkupplung gewährleistet. Während des Ankuppelns gleitet der Auflieger über die Oberseite der Sattelkupplung, wobei die seitliche Führung über den Königszapfen gewährleistet wird, der während des Ankuppelns bis zum Erreichen seiner Verriegelungsposition in der Einfahröffnung zwangsgeführt ist.

Ein gattungsgemäßes Steckersystem offenbart die DE 10 2004 024 333 A1 mit einem schwenkbar um den Königszapfen gelagerten Schwenkkeil, an dessen Unterseite ein Stecker angeordnet ist, der während des mechanischen Kupplungsvorganges von Zugfahrzeug und Auflieger in die zugfahrzeugseitige Steckerbuchse eingefahren wird. Damit sich während des Kupplungsvorganges beide Steckerhälften treffen, sind an dem Stecker konisch zulaufende, teilzylindrische Führungselemente angeordnet, die von nach hinten ragenden Führungsarmen der Steckerbuchse erfasst und an diesen bis zum Erreichen der endgültigen Kontaktposition zwangsgeführt werden. Der wesentliche Nachteil dieses Systems liegt in dem Toleranzausgleich und der Zentrierung der beiden Steckerhälften, da an einem der beiden Führungsarme eine sehr exakte Ausrichtung der Steckerhälften zueinander stattfindet und sich die Toleranzen an dem zweiten Führungsarm summieren. Dieses wiederum führt bei häufigen Kupplungsvorgängen zu einem erheblichen Verschleiß und einem daraus resultierenden Sicherheitsrisiko.

Demzufolge lag der Erfindung die Aufgabe zugrunde, ein Steckersystem beziehungsweise eine Steckerhälfte für ein automatisiertes Kupplungssystem von Versorgungsleitungen hinsichtlich seiner/ihrer Zentrierung während des Kupplungsvorganges zu verbessern.

Die Aufgabe wird erfindungsgemäß mit einem Steckersystem gelöst, bei dem die ersten Führungselemente einen Hauptführungsdorn und mindestens einen dazu beabstandeten Zentrierdorn umfassen, wobei mindestens der Zentrierdorn und/oder das zugehörige zweite Führungselement in radialer Richtung elastisch ist.

Der Hauptführungsdorn hat in gestecktem Zustand die positive Eigenschaft, eventuell auftretende Knickkräfte von den Leitungskontakten fernzuhalten. Im Ergebnis wird durch den Hauptführungsdorn der Bewegungsumfang auf zwei Freiheitsgrade begrenzt.

Unter einem elastischen Zentrierdorn wird sowohl eine Elastizität des Zentrierdornes selbst als auch eine elastische Lagerung eines an sich biegsteifen Zentrierdorns verstanden. Durch die elastischen Eigenschaften des Zentrierdorns werden Toleranzen im gesteckten Zustand zwischen Stecker und Steckerdose durch eine entsprechende Formveränderung des Zentrierdorns kompensiert.

Der Hauptführungsdorn sollte dabei mittig auf der Vorderseite des Steckers beziehungsweise der Steckerdose angeordnet sein. Der mindestens eine Zentrierdorn erstreckt sich dann seitlich versetzt sowie achsparallel zu dem Hauptführungsdorn und tritt ebenfalls auf der Vorderseite der jeweiligen Steckerhälfte hervor.

Vorteilhafterweise sind zwei beidseitig des Hauptführungsdorns angeordnete Zentrierdorne vorgesehen. Zwischen den Zentrierdornen sollte der Hauptführungsdorn mittig angeordnet sein. Aufgrund der Anordnung von zwei Zentrierdomen verteilen sich die Toleranzen in annähernd gleichem Maß auf der jeweiligen Seite des Hauptführungsdorns, wodurch ein besonders präzises Zusammengleiten von Stecker und Steckerdose möglich ist.

Es hat sich als günstig erwiesen, wenn der Hauptführungsdorn und der mindestens eine Zentrierdorn dem Stecker zugeordnet sind. Hieraus resultiert der Vorteil, dass die Strom führende, üblicherweise am Zugfahrzeug angeordnete Steckerdose ohne vorstehende Bauteile in einem schwer zugänglichen Bereich unterhalb der Einfahröffnung der Sattelkupplung angeordnet ist und sich die vorstehenden Hauptführungs- und Zentrierdorne in einem gut zugänglichen Bereich auf der Unterseite des Aufliegers befinden.

Vorzugsweise sind die zweiten Führungselemente der Steckerdose als Aufnahmeöffnungen ausgebildet.

Gemäß einer weiteren zweckmäßigen Ausführungsform weist die zur Aufnahme des Hauptführungsdorns vorgesehene Aufnahmeöffnung einen Innendurchmesser komplementär zum Außendurchmesser des Hauptführungsdorns auf. Aus fertigungstechnischen Gründen sollte die Aufnahmeöffnung für den Hauptführungsdorn eine Bohrung mit einem kreisrunden Querschnitt sein. Bevorzugt weist der Hauptführungsdorn dann einen zylindrischen Querschnitt auf.

Ebenso kann die zur Aufnahme des mindestens einen Zentrierdorns vorgesehene Aufnahmeöffnung mit einem Innendurchmesser komplementär zum Außendurchmesser des mindestens einen Zentrierdorns ausgebildet sein. Sofern zwei Zentrierdorne zum Einsatz kommen, sind auch Ausführungsformen möglich, bei denen der Innendurchmesser der Aufnahmeöffnung größer als der Außendurchmesser der Zentrierdorne ist und beispielsweise auch eine Ausnehmung der äußeren Gehäusekontur umfassen kann. Voraussetzung hierfür ist, dass die Aufnahmeöffnung an der Steckerdose beidseitig ober- oder unterhalb der Zentrierdorne angeordnet ist. Bei derartigen Ausführungsformen spielen die Durchmessertoleranzen der Zentrierdorne keine Rolle.

Der vordere Abschnitt des Zentrierdorns ist vorzugsweise in einer Tropfen- oder Kugelform ausgebildet, die bei einer Lageänderung eines federnd gelagerten Zentrierdorns eine Kippbewegung innerhalb der Ausnehmung der Steckerdose in radialer Richtung zulässt. Dieses ist insbesondere bei gerundeten Formgebungen möglich, die einen linienartigen Kontakt mit der Innenwand der Aufnahmeöffnung anstatt einer flächenartigen Kontaktierung bewirken.

Vorteilhafterweise weist die Aufnahmeöffnung jeweils zur nächstliegenden seitlichen Wandfläche einen Durchbruch auf. Diese ermöglicht ein besonders günstiges seitliches Auswandern des Zentrierdornes. Sofern zwei Zentrierdorne vorhanden sind, wandern diese in entgegengesetzter Richtung aus und erzeugen dadurch eine gegensinnige Rückstellkraft, welche den Stecker zentriert zu dem Hauptführungsdorn in der Steckerdose hält.

Gemäß einer alternativen Ausgestaltung sind die Aufnahmeöffnungen der beiden Zentrierdorne jeweils aus Ausnehmungen der Steckerdose mit einem gerade verlaufenden horizontalen Wandabschnitt gebildet, die jeweils auf der Ober- und/oder Unterseite der Steckerdose ausgeformt sind. Dabei stützen sich die Zentrierdorne an einer entsprechend ausgeformten Gehäusekontur der jeweiligen Steckerhälfte von außen ab. Auch diese Ausnehmungen können in die seitlichen Wandflächen münden.

Günstigerweise sind der Stecker und die Steckerdose aus Kunststoff gefertigt. Der Kunststoff selbst ist elektrisch isolierend, so dass keine zusätzlichen Maßnahmen zur Isolation der elektrischen Leitungskontakte ergriffen werden müssen. Darüber hinaus lassen sich der Stecker und die Steckerdose preisgünstig aus Kunststoff herstellen, wobei mit dem Kunststoff problemlos andere Materialien kombiniert werden können. Aufgrund der guten Verarbeitbarkeit können zum Beispiel die Fließkanäle für die Druckluftversorgung auf einfache Weise in den Kunststoff eingebracht werden, der zudem nicht korrodiert.

Der Hauptführungsdorn und der mindestens eine Zentrierdorn sollten dagegen, um die notwendige Verschleißfestigkeit zu gewährleisten, aus Metall gefertigt sein.

Es hat sich auch als vorteilhaft herausgestellt, wenn der Hauptführungsdorn und der mindestens eine Zentrierdorn den Stecker in axialer Richtung vollständig durchlaufen. Vorzugsweise sind der Hauptführungsdorn und der mindestens eine Zentrierdorn an der rückwärtigen Bodenwand befestigt. Zweckmäßigerweise ist der mindestens eine Zentrierdorn innerhalb des Steckers von einem an der Vorderseite mündenden Ringraum umgeben und stützt sich kurz vor Austritt aus dem Ringraum gegenüber dessen Wandung mit einem elastischen Element ab. Diese Ausführungsform ermöglicht eine Taumelbewegung um die axiale Erstreckung des Zentrierdorns innerhalb des Steckers, die lediglich durch das ebenfalls im Ringraum angeordnete elastische Element begrenzt ist.

Als elastisches Element kann beispielsweise ein O-Ring zum Einsatz kommen.

Alternativ hierzu wäre es auch möglich, den mindestens einen Zentrierdorn selbst aus einem elastischen Material herzustellen und passgenau in den Stecker einzusetzen.

Vorteilhafterweise steht der Hauptführungsdorn gegenüber der Vorderseite weiter vor als der mindestens eine Zentrierdorn. Diese konstruktive Ausgestaltung ermöglicht zunächst eine grobe Ausrichtung der beiden Steckerhälften zueinander durch einen ersten Eingriff des Hauptführungsdorns in die dafür vorgesehenen Führungselemente der anderen Steckerhälfte während des Ankuppelns. Erst bei einer weiteren räumlichen Annäherung von Stecker und Steckerdose gelangt der mindestens eine Zentrierdorn in Eingriff und sorgt für eine präzise Ausrichtung, wobei der Hauptführungsdorn während der Annäherung stets in Wirkeingriff mit der anderen Steckerhälfte verbleibt.

Günstigerweise ist der Stecker an einem komplementär zu der Einfahröffnung einer Sattelkupplung ausgebildeten Schwenkkeil angeordnet. Diese Ausführungsform kann an gattungsgemäßen Steckkupplungssystemen für Sattelzüge zum Einsatz kommen.

Die Erfindung ist auch an einer ersten Steckerhälfte mit daran ausgebildeten Führungselementen realisiert, die bei einer Annäherung von Führungselementen einer zweiten Steckerhälfte mit diesen in Wirkeingriff bringbar sind, wobei die Führungselemente einen Hauptführungsdorn und mindestens einen seitlich dazu beabstandeten Zentrierdorn umfassen. Erfindungsgemäß ist der mindestens eine Zentrierdorn in radialer Richtung elastisch.

Zum besseren Verständnis wird die Erfindung nachfolgend anhand von insgesamt drei Figuren näher erläutert. Es zeigen die:
- Figur 1:: eine perspektivische Ansicht auf einen Stecker und eine Steckerdose;
- Figur 2:: einen horizontalen Querschnitt durch den Stecker und die Steckerdose gemäß Figur 1 und
- Figur 3:: eine Vorderansicht auf eine Steckerdose gemäß einer alternativen Ausführungsform.

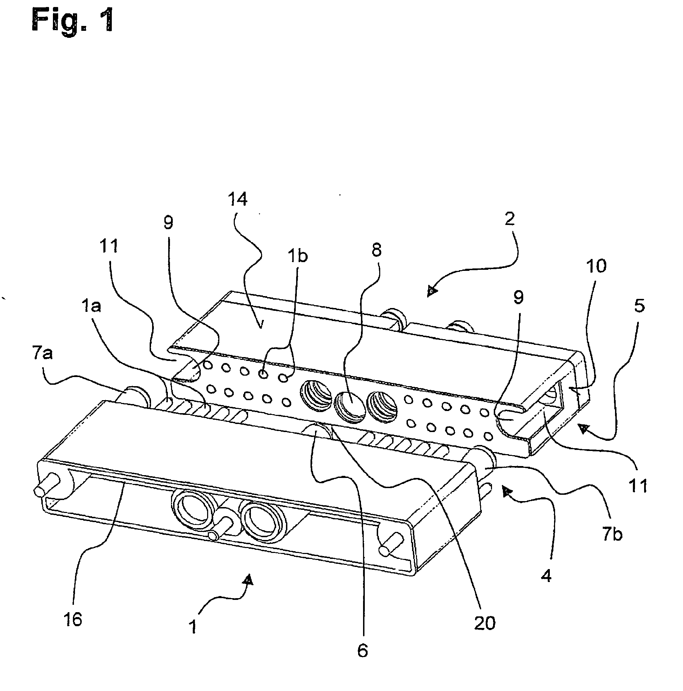

Die Figur 1 zeigt eine perspektivische Ansicht auf einen erfindungsgemäßen Stecker 1 als erste Steckerhälfte mit einer dazugehörigen Steckerdose 2 als zweite Steckerhälfte.

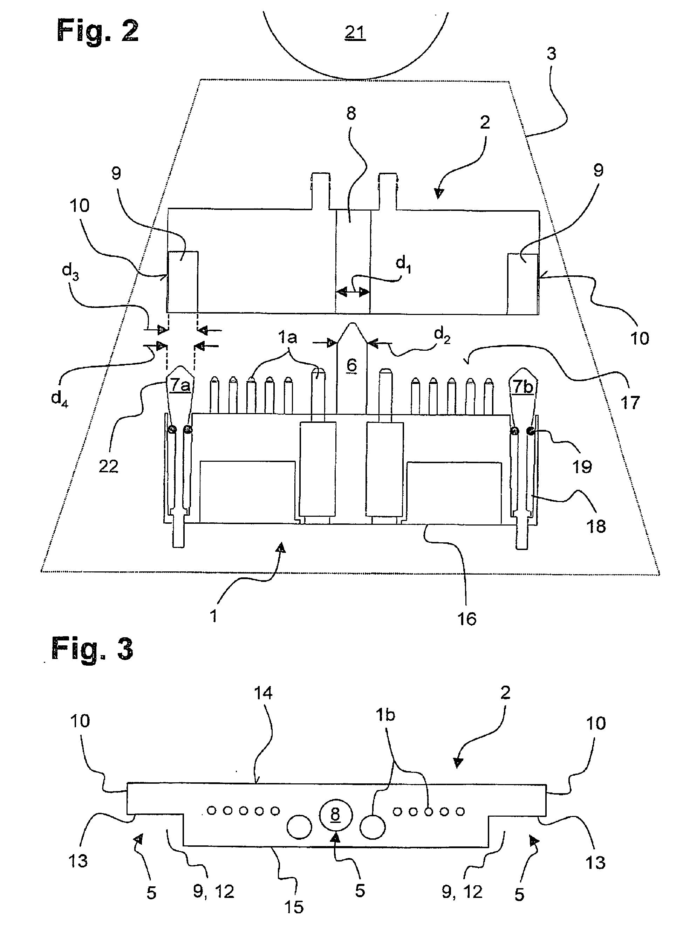

Der Stecker 1 weist eine kastenartige Form auf und ist auf seiner zur Steckerdose 2 gerichteten Vorderseite 17 (siehe Figur 2) mit vorstehenden Leitungskontakten 1a ausgebildet. Die Leitungskontakte 1 a sind beidseitig um einen mittig angeordneten Hauptführungsdorn 6 gruppiert. Der Hauptführungsdorn 6 ist zylindrisch ausgeformt und gleitet während des Annäherns des Steckers 1 an die Steckerdose 2 in eine gegenüberliegende Aufnahmeöffnung 8 der Steckerdose 2. Dieses Einstechen des Hauptführungsdorns 6 in die komplementär als Bohrung erstellte Aufnahmeöffnung 8 wird durch eine endseitig an dem Hauptführungsdorn 6 befindliche konisch zulaufende Spitze 20 erleichtert.

An dem Stecker 1 ist in dessen äußeren seitlichen Randbereichen auf jeder Seite jeweils ein Zentrierdorn 7a, 7b zu erkennen. Die Leitungskontakte 1 a des Steckers 1 befinden sich auf jeder Seite des Hauptführungsdorns 6 zwischen dem Hauptführungsdorn 6 und dem jeweiligen Zentrierdorn 7a, 7b.

Der Hauptführungsdorn 6 und die Zentrierdorne 7a, 7b bilden die ersten Führungselemente 4 des Steckers 1.

Die Steckerdose 2 weist zwei Aufnahmeöffnungen 9 für eine formschlüssige Aufnahme der Zentrierdorne 7a, 7b auf. Die Aufnahmeöffnungen 9 münden beide über einen Durchbruch 11 in die zugehörige seitliche Wandfläche 10. Darüber hinaus sind auf der dem Stecker 1 zugewandten Seite der Steckerbuchse 2 ebenfalls Leitungskontakte 1 b angeordnet, die bei der vorgesehenen Ausrichtung der Steckerhälften 1, 2 exakt den Leitungskontakten 1a gegenüberstehen und diese aufnehmen.

Die Aufnahmeöffnungen 8, 9 bilden die zweiten Führungselemente 5 der Steckerdose 2.

Die Figur 2 zeigt einen horizontalen Querschnitt durch den Stecker 1 und die Steckerdose 2. Zusätzlich ist schematisch ein darüber befindlicher Schwenkkeil 3 dargestellt, an dessen Unterseite der Stecker 1 angreift. Der Schwenkkeil 3 wiederum ist schwenkbar um einen Königszapfen 21 (teilweise dargestellt) gelagert, vorzugsweise durch eine Befestigung unmittelbar an dem Königszapfen 21. Die Abmessungen des Schwenkkeiles 3 entsprechen der keilförmigen Geometrie der Einfahröffnung einer nicht näher gezeigten Sattelkupplung, so dass der Schwenkkeil 3 bei angekuppeltem Auflieger durch die Sattelkupplung seitlich fixiert ist.

Der Querschnitt durch den Stecker 1 gemäß Figur 2 verdeutlicht die Anordnung der beiden äußeren Zentrierdorne 7a, 7b zu dem mittig dazwischen liegenden Hauptführungsdorn 6. Ausgehend von der Vorderseite 17 des Steckers 1 steht der Hauptführungsdorn 6 in Richtung der Steckerdose 2 weiter vor als die Zentrierdorne 7a, 7b. Bei einer weiteren Annäherung der Steckerdose 2 an den Stecker 1 wird der Hauptführungsdorn 6 zuerst in die Aufnahmeöffnung 8 eintauchen. Erst wenn diese erste Führung gegeben ist, gelangen die zurückversetzten Zentrierdorne 7a, 7b mit den dafür vorgesehenen Aufnahmeöffnungen 9 in Wirkeingriff. Hieraus resultiert eine Vor-Ausrichtung durch den Hauptführungsdorn 6 und eine nachfolgende feine Justierung durch die beiden Zentrierdorne 7a, 7b.

Der Hauptführungsdorn 6 weist eine zylindrische Außenumfangsfläche auf, welche beim Gleiten in der vorzugsweise kreisrunden Aufnahmeöffnung 8 eine präzise Führung der Steckerhälften 1, 2 in radialer Richtung ermöglicht. Um das radiale Spiel möglichst gering zu halten, ist der Innendurchmesser d₁ der Aufnahmeöffnung 8 nur geringfügig größer gewählt als der Außendurchmesser d₂ des Hauptführungsdorns 6.

Innerhalb der kreisrunden Kontur der Aufnahmeöffnung 8 können hier nicht gezeigte axial verlaufende Nuten eingefügt sein, die während des Betriebes der Aufnahme von Schmutz dienen, welcher insbesondere über den Hauptführungsdorn 6 in die Aufnahmeöffnung 8 eingetragen wird und sich in den Nuten absetzen kann. Dadurch gelangt der Schmutz nicht zwischen die in Kontakt miteinander stehenden Wandungen von Hauptführungsdorn 6 und Aufnahmeöffnung 8, so dass ein Verkanten der Bauteile und ein vorzeitiger Verschleiß vermieden werden.

Die Zentrierdorne 7a, 7b sind an ihrem vorderen Ende mit einem tulpenförmigen Kopf 22 ausgebildet, dessen maximaler Außendurchmesser d₄ nur geringfügig kleiner geformt ist als der Innendurchmesser d₃ der Aufnahmeöffnung 9. Innerhalb des Steckers 1 weisen die Zentrierdorne 7a, 7b einen geringeren Durchmesser auf und sind mittels eines Ringraums 18 über einen Großteil ihrer axialen Länge beabstandet zu dem Stecker 1 angeordnet. Die Befestigung der Zentrierdorne 7a, 7b erfolgt im Bereich der rückwärtigen Bodenwand 16 und lässt insbesondere auf der Vorderseite 17 einen Bewegungsspielraum der Zentrierdorne 7a, 7b in radialer Richtung zu.

Der Bewegungsumfang der Zentrierdorne 7a, 7b wird durch ein elastisches Element 19 in Form eines O-Rings eingeschränkt. Aufgrund der elastischen Eigenschaften der Lagerung der Zentrierdorne 7a, 7b erfolgt eine Verteilung des systemimmanenten Spiels gleichmäßig auf beide Seiten des Steckers 1 beziehungsweise beide Zentrierdorne 7a, 7b.

Die in der Figur 2 erkennbaren unterschiedlichen Ausbildungen der Leitungskontakte 1a sind auf die unterschiedlichen Verwendungen als elektrische und pneumatische Kontakte zurückzuführen.

Die Figur 3 zeigt eine Vorderansicht auf eine Steckerbuchse 2 mit einer alternativen Ausführung der Aufnahmeöffnungen 9. Diese sind als Ausnehmung 12 der äußeren Gehäusekontur ausgeformt, wobei jede der Ausnehmungen 12 einen horizontal verlaufenden Wandabschnitt 13 umfasst, welcher gegenüber der Unterseite 15 der Steckerdose 2 zurückversetzt ist. In der gezeigten Ausführungsform münden die beiden Ausnehmungen 12 in den seitlichen Wandflächen 10. Die Oberseite 14 der Steckerdose 2 verläuft dagegen plan bis zu den seitlichen Wandflächen 10. Darüber hinaus verlaufen die Oberseite 14 und die Unterseite 15 parallel zueinander.

### Bezugszeichenliste

- 1: Stecker, erste Steckerhälfte
- 1a: Leitungskontakte Stecker
- 1b: Leitungskontakte Steckerbuchse
- 2: Steckerdose, zweite Steckerhälfte
- 3: Schwenkkeil
- 4: erste Führungselemente Stecker
- 5: zweite Führungselemente Steckerdose
- 6: Hauptführungsdorn
- 7a, b: Zentrierdorn
- 8: Aufnahmeöffnung Hauptführungsdorn
- 9: Aufnahmeöffnung Zentrierdorn
- 10: seitliche Wandfläche
- 11: Durchbruch
- 12: Ausnehmung
- 13: horizontaler Wandabschnitt
- 14: Oberseite Steckerdose
- 15: Unterseite Steckerdose
- 16: rückwärtige Bodenwand Stecker
- 17: Vorderseite Stecker
- 18: Ringraum
- 19: elastisches Element, O-Ring
- 20: Spitze Hauptführungsdorn
- 21: Königszapfen
- 22: Kopf Zentrierdorn
- d₁: Innendurchmesser Aufnahmeöffnung Hauptführungsdorn
- d₂: Außendurchmesser Hauptführungsdorn
- d₃: Innendurchmesser Aufnahmeöffnung Zentrierdorn
- d₄: Außendurchmesser Zentrierdorn

## Patentansprüche

1. Steckersystem für Anhängerfahrzeuge mit einem automatisierten Kupplungssystem der Versorgungsleitungen, umfassend einen jeweils die Leitungskontakte (1 a) tragenden Stecker (1) und eine Steckerdose (2), wobei der Stecker (1) erste Führungselemente (4) aufweist, die bei einer Annäherung mit zweiten Führungselementen (5) der Steckerdose (2) in Wirkeingriff gelangen,
**dadurch gekennzeichnet,**
**dass** die ersten Führungselemente (4) einen Hauptführungsdorn (6) und mindestens einen dazu beabstandeten Zentrierdorn (7a, 7b) umfassen, wobei mindestens der Zentrierdorn (7a, 7b) und/oder das zugehörige zweite Führungselement (5,9) in radialer Richtung elastisch ist.

2. Steckersystem nach Anspruch 1, **dadurch gekennzeichnet, dass** zwei beidseitig des Hauptführungsdorns (6) angeordnete Zentrierdorne (7a, 7b) vorgesehen sind.

3. Steckersystem nach Anspruch 1 oder 2, **dadurch gekennzeichnet, dass** der Hauptführungsdorn (6) und der mindestens eine Zentrierdorn (7a, 7b) dem Stecker (1) zugeordnet sind.

4. Steckersystem nach einem der Ansprüche 1 bis 3, **dadurch gekennzeichnet, dass** die zweiten Führungselemente (5) der Steckerdose (2) als Aufnahmeöffnungen (8, 9) ausgebildet sind.

5. Steckersystem nach Anspruch 4, **dadurch gekennzeichnet, dass** die zur Aufnahme des Hauptführungsdorns (6) vorgesehene Aufnahmeöffnung (8) einen Innendurchmesser (d₁) komplementär zum Außendurchmesser (d₂) des Hauptführungsdorns (6) aufweist.

6. Steckersystem nach Anspruch 4 oder 5, **dadurch gekennzeichnet, dass** die zur Aufnahme des mindestens einen Zentrierdorns (7a, 7b) vorgesehene Aufnahmeöffnung (9) mit einem Innendurchmesser (d₃) komplementär zum Außendurchmesser (d₄) des mindestens einen Zentrierdorns (7a, 7b) ausgebildet ist.

7. Steckersystem nach Anspruch 6, **dadurch gekennzeichnet, dass** die Aufnahmeöffnung (9) jeweils zur nächstliegenden seitlichen Wandfläche (10) einen Durchbruch (11) aufweist.

8. Steckersystem nach Anspruch 4 oder 5, **dadurch gekennzeichnet, dass** die Aufnahmeöffnungen (9) für die Zentrierdorne (7a, 7b) aus Ausnehmungen (12) der Steckerdose (2) mit einem plan verlaufenden horizontalen Wandabschnitt (13) gebildet sind, die jeweils auf der Ober- und/oder Unterseite (14, 15) der Steckerdose (2) ausgeformt sind.

9. Steckersystem nach Anspruch 8, **dadurch gekennzeichnet, dass** die Ausnehmungen (12) in die seitlichen Wandflächen (10) münden.

10. Steckersystem nach einem der Ansprüche 1 bis 9, **dadurch gekennzeichnet, dass** der Stecker (1) und die Steckerdose (2) aus Kunststoff gefertigt sind.

11. Steckersystem nach einem der Ansprüche 1 bis 10, **dadurch gekennzeichnet, dass** der Hauptführungsdorn (6) und der mindestens eine Zentrierdorn (7a, 7b) aus Metall gefertigt sind.

12. Steckersystem nach einem der Ansprüche 1 bis 11, **dadurch gekennzeichnet, dass** der Hauptführungsdorn (6) und der mindestens eine Zentrierdorn (7a, 7b) den Stecker (1) in axialer Richtung vollständig durchlaufen.

13. Steckersystem nach einem der Ansprüche 1 bis 12, **dadurch gekennzeichnet, dass** der Hauptführungsdorn (6) und der mindestens eine Zentrierdorn (7a, 7b) an der rückwärtigen Bodenwand (16) des Steckers (1) befestigt sind.

14. Steckersystem nach einem der Ansprüche 1 bis 13, **dadurch gekennzeichnet, dass** der mindestens eine Zentrierdorn (7a, 7b) innerhalb des Steckers (1) von einem an dessen Vorderseite (17) mündenden Ringraum (18) umgeben ist und sich kurz vor Austritt aus dem Ringraum (18) gegenüber dessen Wandung mit einem elastischen Element (19) abstützt.

15. Steckersystem nach Anspruch 14, **dadurch gekennzeichnet, dass** das elastische Element (19) ein O-Ring ist.

16. Steckersystem nach einem der Ansprüche 1 bis 15, **dadurch gekennzeichnet, dass** der Hauptführungsdorn (6) gegenüber der Vorderseite (17) des Steckers (1) weiter vorsteht als der mindestens eine Zentrierdorn (7a, 7b).

17. Steckersystem nach einem der Ansprüche 1 bis 16, **dadurch gekennzeichnet, dass** der Stecker (1) an einem komplementär zu der Einfahröffnung einer Sattelkupplung ausgebildeten Schwenkkeil (3) angeordnet ist.

18. Erste Steckerhälfte (1) mit daran ausgebildeten ersten Führungselementen (4), die bei einer Annäherung von zweiten Führungselementen (5) einer zweiten Steckerhälfte (2) mit diesen in Wirkeingriff bringbar sind, **dadurch gekennzeichnet,**
**dass** die ersten Führungselemente (4) einen Hauptführungsdorn (6) und mindestens einen seitlich dazu beabstandeten Zentrierdorn (7a, 7b) umfassen, wobei der mindestens eine Zentrierdorn (7a, 7b) in radialer Richtung elastisch ist beziehungsweise elastisch gelagert ist.

## Claims

1. Plug system for semitrailer vehicles, having an automatic coupling system for the supply lines, comprising a plug (1) which carries the line contacts (1a) in each case and a plug socket (2), the plug (1) having first guiding elements (4) which, in the event of an approach action, move into operational engagement with second guiding elements (5) of the plug socket (2), **characterised in that**
the first guiding elements (4) comprise a main guiding pin (6) and at least one centering pin (7a, 7b) which is spaced-apart therefrom, at least the centering pin (7a, 7b) and/or the associated second guiding element (5, 9) being resilient in a radial direction.

2. Plug system according to claim 1, **characterised in that** there are provided two centering pins (7a, 7b) which are arranged at both sides of the main guiding pin (6).

3. Plug system according to claim 1 or claim 2, **characterised in that** the main guiding pin (6) and the at least one centering pin (7a, 7b) are associated with the plug (1).

4. Plug system according to any one of claims 1 to 3, **characterised in that** the second guiding elements (5) of the plug socket (2) are constructed as receiving openings (8, 9).

5. Plug system according to claim 4, **characterised in that** the receiving opening (8) provided for receiving the main guiding pin (6) has an inner diameter (d₁) which is complementary to the outer diameter (d₂) of the main guiding pin (6).

6. Plug system according to claim 4 or claim 5, **characterised in that** the receiving opening (9) which is provided to receive the at least one centering pin (7a, 7b) is constructed with an inner diameter (d₃) which is complementary to the outer diameter (d₄) of the at least one centering pin (7a, 7b).

7. Plug system according to claim 6, **characterised in that** the receiving opening (9) has a through-opening (11) in each case with respect to the nearest lateral wall face (10).

8. Plug system according to claim 4 or claim 5, **characterised in that** the receiving openings (9) for the centering pins (7a, 7b) are formed from recesses (12) of the plug socket (2) with a horizontal wall portion (13) extending in a planar manner, which are formed at the upper side and/or the lower side (14, 15) of the plug socket (2), respectively.

9. Plug system according to claim 8, **characterised in that** the recesses (12) open in the lateral wall faces (10).

10. Plug system according to any one of claims 1 to 9, **characterised in that** the plug (1) and the plug socket (2) are produced from plastics material.

11. Plug system according to any one of claims 1 to 10, **characterised in that** the main guiding pin (6) and the at least one centering pin (7a, 7b) are produced from metal.

12. Plug system according to any one of claims 1 to 11, **characterised in that** the main guiding pin (6) and the at least one centering pin (7a, 7b) extend fully through the plug (1) in an axial direction.

13. Plug system according to any one of claims 1 to 12, **characterised in that** the main guiding pin (6) and the at least one centering pin (7a, 7b) are secured to the rear base wall (16) of the plug (1).

14. Plug system according to any one of claims 1 to 13, **characterised in that** the at least one centering pin (7a, 7b) is surrounded within the plug (1) by an annular space (18) which opens at the front side (17) thereof and is supported shortly before leaving the annular space (18) with respect to the wall thereof by means of a resilient element (19).

15. Plug system according to claim 14, **characterised in that** the resilient element (19) is an O ring.

16. Plug system according to any one of claims 1 to 15, **characterised in that** the main guiding pin (6) protrudes further with respect to the front side (17) of the plug (1) than the at least one centering pin (7a, 7b).

17. Plug system according to any one of claims 1 to 16, **characterised in that** the plug (1) is arranged on a pivot wedge (3) which is constructed in a complementary manner to the introduction opening of a fifth wheel.

18. First plug half (1) having first guiding elements (4) which are formed thereon and which, when approaching second guiding elements (5) of a second plug half (2), can be brought into operational engagement therewith,
**characterised in that**
the first guiding elements (4) comprise a main guiding pin (6) and at least one centering pin (7a, 7b) which is spaced laterally therefrom, the at least one centering pin (7a, 7b) being resilient in a radial direction, or being supported in a resilient manner.

## Revendications

1. Système de connecteurs enfichables pour véhicules à remorques dotés d'un système automatisé d'attelage des lignes d'alimentation, comprenant un connecteur mâle (1) portant les contacts de lignes respectifs (1a) et un connecteur femelle (2), sachant que le connecteur mâle (1) présente des premiers éléments de guidage (4) qui, lorsqu'ils sont approchés de deuxièmes éléments de guidage (5) du connecteur femelle (2), parviennent en engagement actif avec ceux-ci,
**caractérisé en ce que** les premiers éléments de guidage (4) comprennent une broche de guidage principale (6) et au moins une broche de centrage (7a, 7b) distante de la précédente, sachant qu'au moins la broche de centrage (7a, 7b) et/ou le deuxième élément de guidage associé (5, 9) est élastique en direction radiale.

2. Système de connecteurs enfichables selon la revendication 1, **caractérisé en ce qu'**il est prévu deux broches de centrage (7a, 7b), disposées de part et d'autre de la broche de guidage principale (6).

3. Système de connecteurs enfichables selon la revendication 1 ou 2, **caractérisé en ce que** la broche de guidage principale (6) et la broche de centrage au moins unique (7a, 7b) sont associées au connecteur mâle (1).

4. Système de connecteurs enfichables selon l'une des revendications 1 à 3, **caractérisé en ce que** les deuxièmes éléments de guidage (5) du connecteur femelle (2) sont réalisés sous la forme d'ouvertures réceptrices (8, 9).

5. Système de connecteurs enfichables selon la revendication 4, **caractérisé en ce que** l'ouverture réceptrice (8) prévue pour recevoir la broche de guidage principale (6) présente un diamètre intérieur (d₁) complémentaire du diamètre extérieur (d₂) de la broche de guidage principale (6).

6. Système de connecteurs enfichables selon la revendication 4 ou 5, **caractérisé en ce que** l'ouverture réceptrice (9) prévue pour recevoir la broche de centrage au moins unique (7a, 7b) est réalisée avec un diamètre intérieur (d₃) complémentaire du diamètre extérieur (d₄) de la broche de centrage au moins unique (7a, 7b).

7. Système de connecteurs enfichables selon la revendication 6, **caractérisé en ce que** l'ouverture réceptrice (9) présente un percement respectif (11) vers la face de paroi latérale la plus proche (10).

8. Système de connecteurs enfichables selon la revendication 4 ou 5, **caractérisé en ce que** les ouvertures réceptrices (9) pour les broches de centrage (7a, 7b) sont formées par des évidements (12) du connecteur femelle (2) dotés d'une partie de paroi horizontale (13) s'étendant de manière plane, évidements qui sont respectivement ménagés sur le dessus (14) et/ou le dessous (15) du connecteur femelle (2).

9. Système de connecteurs enfichables selon la revendication 8, **caractérisé en ce que** les évidements (12) débouchent dans les faces de parois latérales (10).

10. Système de connecteurs enfichables selon l'une des revendications 1 à 9, **caractérisé en ce que** le connecteur mâle (1) et le connecteur femelle (2) sont réalisés en matière plastique.

11. Système de connecteurs enfichables selon l'une des revendications 1 à 10, **caractérisé en ce que** la broche de guidage principale (6) et la broche de centrage au moins unique (7a, 7b) sont réalisées en métal.

12. Système de connecteurs enfichables selon l'une des revendications 1 à 11, **caractérisé en ce que** la broche de guidage principale (6) et la broche de centrage au moins unique (7a, 7b) traversent totalement le connecteur mâle (1) en direction axiale.

13. Système de connecteurs enfichables selon l'une des revendications 1 à 12, **caractérisé en ce que** la broche de guidage principale (6) et la broche de centrage au moins unique (7a, 7b) sont fixées sur la paroi de fond arrière (16) du connecteur mâle (1).

14. Système de connecteurs enfichables selon l'une des revendications 1 à 13, **caractérisé en ce que** la broche de centrage au moins unique (7a, 7b), à l'intérieur du connecteur mâle (1), est entourée par un espace annulaire (18) débouchant sur le côté avant (17) de ce connecteur et s'appuie, peu avant la sortie de l'espace annulaire, contre la paroi de ce dernier par un élément élastique (19).

15. Système de connecteurs enfichables selon la revendication 14, **caractérisé en ce que** l'élément élastique (19) est un joint torique.

16. Système de connecteurs enfichables selon l'une des revendications 1 à 15, **caractérisé en ce que** la broche de guidage principale (6) dépasse plus du côté avant (17) du connecteur mâle (1) que la broche de centrage au moins unique (7a, 7b).

17. Système de connecteurs enfichables selon l'une des revendications 1 à 16, **caractérisé en ce que** le connecteur mâle (1) est disposé sur une clavette pivotante (3) réalisée de forme complémentaire de l'ouverture d'insertion d'une sellette d'attelage.

18. Première moitié de connecteur (1) sur laquelle sont formés des premiers éléments de guidage (4) qui, lorsqu'ils sont approchés de deuxièmes éléments de guidage (5) d'une deuxième moitié de connecteur (2), peuvent être amenés en engagement actif avec ceux-ci,
**caractérisée en ce que** les premiers éléments de guidage (4) comprennent une broche de guidage principale (6) et au moins une broche de centrage (7a, 7b) latéralement distante de la précédente, sachant que la broche de centrage au moins unique (7a, 7b) est élastique ou montée élastiquement en direction radiale.
